# EUROPÄISCHE PATENTSCHRIFT

(11) **EP 2 954 812 B1**
(45) Veröffentlichungstag und Bekanntmachung des Hinweises auf die Patenterteilung: **08.02.2017**
(21) Anmeldenummer: 14171805.6
(22) Anmeldetag: 10.06.2014
(51) Int. Cl.: A47J 37/12

(54) **Vorrichtung zur automatischen Zubereitung von dehydrierten Lebensmitteln und Verfahren dafür**
Device for the automatic preparation of dehydrated food and method for the same
Dispositif destiné à la préparation automatique de produits alimentaires déshydrogénés, et son procédé

(43) Veröffentlichungstag der Anmeldung: 16.12.2015
(73) Patentinhaber: Fripo AG, 9491 Ruggel (LI)
(72) Erfinder: Köhle, Manfred, 6850 Dornbirn (AT); Gassner, Dr. Cornelia, 9493 Mauren (LI); Junker, Michael, 9493 Mauren (LI)
(74) Vertreter: Patentbüro Paul Rosenich AG

(56) Entgegenhaltungen:
- WO-A1-90/04346
- US-A- 4 136 202
- US-A- 5 605 091

## Beschreibung

Die Erfindung betrifft eine Vorrichtung zur automatischen Zubereitung von dehydrierten Lebensmitteln nach dem Oberbegriff des Anspruchs 1. Weiter betrifft die Erfindung ein Verfahren zur automatischen Zubereitung von dehydrierten Lebensmitteln mit einer solchen Vorrichtung nach Anspruch 8.

Vorrichtungen zur automatischen Zubereitung von Lebensmitteln, so genannte Vollautomaten, ermöglichen zur jeder Zeit und an jedem Ort frisch zubereitete Lebensmittel dem Konsumenten einfach zur Verfügung zu stellen.

Aus der US 4,838,455 A ist eine Vorrichtung zur automatischen Zubereitung von Lebensmittel bekannt, der ein Kühlfach für die Aufbewahrung der noch zu zubereitenden Lebensmittels, hier frische Kartoffelstreifen, aufweist. Die Kartoffelstreifen werden portionsweise der als Ofen ausgebildeten Zubereitungseinheit zugeführt. Sobald die Kartoffelstreifen gar sind, werden diese einer Ausgabeeinrichtung zugeführt, aus welcher der Konsument die zubereiteten Kartoffelstreifen (Pommes Frites) entnehmen und anschliessend verzehren kann.

Nachteilig an der bekannten Lösung ist, dass bis zur Übergabe des Lebensmittels in die Zubereitungseinheit dieses gekühlt gehalten werden muss und daher diese bekannte Vorrichtung einen hohen Energiebedarf aufweist. Zudem darf die Kühlkette beim Nachfüllen des Lebensmittels nicht unterbrochen werden, damit das Lebensmittel, hier die Kartoffelstreifen, nicht verderben.

Um den Aufwand und die Kosten für die Lagerung des zubereitenden Lebensmittels in einer gattungsgemässen Vorrichtung klein zu halten, ist bekannt, ein Lebensmittel dehydriert bis zu dessen Verwendung in einer Vorrichtung zu lagern. Das dehydrierte Lebensmittel wird vor dessen Zubereitung rehydriert und vor dem Zuführen in die Zubereitungseinrichtung in die gewünschte Form gebracht.

Beispielsweise aus der EP 0 445 112 B1 (= WO 90/04346 A1) ist eine Vorrichtung zur Zubereitung von
dehydrierten Lebensmittel, hier Kartoffelpulver, bekannt, die einen Behälter für das Kartoffelpulver aufweist. Mittels eines Pulverschüttlers wird eine vorbestimmte Menge des Kartoffelpulvers aus dem Behälter in eine von fünf Zylinderausnehmungen eines als Drehteller ausgebildeten Transportmittels gefüllt. Anschliessend wird das Transportmittel um 72° gedreht. In dieser Stellung des Transportmittels wird das in der Zylinderausnehmung befindliche Kartoffelpulver mittels einer über eine Rehydriereinrichtung bestimmten Menge von Wasser als Rehydrierflüssigkeit rehydriert und mittels einer Mischeinrichtung durchmischt. Dann wird das Transportmittel dreimal um je 72° gedreht. Während dieser Transportzeit quellt das rehydrierte Kartoffelpulver auf. In dieser Stellung des Transportmittels befindet sich die Zylinderausnehmung mit dem rehydrierten Kartoffelpulver bei einer Auspresseinrichtung, welche dieses durch ein unterhalb des Transportmittels befindliches Siebelement auspresst. Die ausgepressten Kartoffelpulverformteile (Kartoffel-Sticks) fallen in eine als Fritteuse ausgebildete Zubereitungseinrichtung, in welcher diese frittiert werden. Nach dem Frittieren der Kartoffel-Sticks werden diese einer Ausgabeeinrichtung und somit dem Konsumenten zugeführt.

Nachteilig an der bekannten Lösung ist, dass der Pulverschüttler komplex im Aufbau ist und konstruktionsbedingt eine Vielzahl von Verschmutzungsmöglichkeiten innerhalb der Vorrichtung bestehen, welche den automatischen Betrieb stören können beziehungsweise aus hygienischen Gründen unerwünscht sind. Um die Gebrauchstauglichkeit der bekannten Vorrichtung sowie eine ausreichende Qualität der zubereiteten Lebensmittel zu gewährleisten, ist daher ein hoher Reinigungs- und Wartungsaufwand für die Vorrichtung erforderlich.

Aufgabe der vorliegenden Erfindung ist es somit, eine Vorrichtung zur automatischen Zubereitung von dehydrierten Lebensmitteln zu schaffen, welche die vorgenannten Nachteile nicht aufweist und insbesondere einen niedrigen Energieaufwand sowie geringen Wartungsaufwand bei Gewährleistung einer hohen Qualität der zubereiteten Lebensmittel aufweist. Weiter ist es die Aufgabe der Erfindung ein Verfahren zur automatischen Zubereitung von dehydrierten Lebensmitteln mit einer solchen Vorrichtung zu schaffen.

Die Aufgabe wird durch die Merkmale der unabhängigen Ansprüche gelöst. Vorteilhafte Weiterbildungen sind in den abhängigen Patentansprüchen dargelegt.

Gemäss der Erfindung weist die Vorrichtung zur automatischen Zubereitung von dehydrierten Lebensmitteln ein Transportmittel zum Transportieren des zubereitenden Lebensmittels in der Vorrichtung, eine Rehydriereinrichtung zum Rehydrieren des dehydrierten Lebensmittels, eine Auspresseinrichtung zum Auspressen des zumindest teilweise rehydrierten Lebensmittels, eine Zubereitungseinrichtung zum Zubereiten des Lebensmittels sowie eine Ausgabeeinrichtung zur Ausgabe des zubereiteten Lebensmittels auf, wobei das dehydrierte Lebensmittel in einer Kartusche vorgesehen ist und eine Penetriereinrichtung mit Penetriermittel zum Penetrieren der Kartusche vorgesehen ist.

Mittels der Kartusche werden vorbestimmte Portionsgrössen des zubereitenden Lebensmittels zur Verfügung gestellt. Die Kartusche schottet das Lebensmittel hermetisch vor Umwelteinflüssen ab, so dass dieses eine lange Haltbarkeitsdauer aufweist. Da das dehydrierte Lebensmittel ohne Kühlung in der Vorrichtung über einen längeren Zeitraum gelagert werden kann, benötigt die erfindungsgemässe Vorrichtung keine Kühleinrichtung und weist damit einen geringen Energiebedarf auf. Weiter ist das Innere der Vorrichtung weitgehend vor Verschmutzung geschützt, womit der Wartungsaufwand für die Vorrichtung massgeblich gegenüber dem Stand der Technik reduziert ist.

Mittels der Penetriermittel, wie beispielsweise dornenförmige oder nadelförmige Elemente oder Abschnitte, wird die Kartusche in einem vordefinierten Bereich geöffnet. Auch nach dem Penetrieren der Kartusche lässt sich diese und somit das dehydrierte Lebensmittel weiterhin einfach innerhalb der Vorrichtung transportieren.

In einem bevorzugten Verfahren wird die Kartusche zur Penetriereinrichtung mittels des Transportmittels befördert. Dann wird die Kartusche mittels der Penetriereinrichtung penetriert und das dehydrierte Lebensmittel mittels einer Flüssigkeit oder einer zweiten Komponente rehydriert. Das zumindest teilweise rehydrierte Lebensmittel wird nun vom Transportmittel weiterbefördert und mittels der Auspresseinrichtung ausgepresst. Das ausgepresste Lebensmittel wird in der Zubereitungseinrichtung zubereitet und der Ausgabeeinrichtung übergeben, aus welcher der Konsument das zubereitete Lebensmittel entnehmen kann.

Das dehydrierte Lebensmittel ist beispielsweise ein Kartoffelgranulat, welches einfach rehydrierbar ist und im aufgequollenen Zustand die gewünschte Konsistenz aufweist. Die Lagerhaltung des Kartoffelgranulats erfolgt vorzugsweise bei Raumtemperatur.

Des Weiteren können auch andere Arten von Lebensmitteln mit der erfindungsgemässen Vorrichtung zubereitet werden, sofern diese dehydrierbar und rehydrierbar sind. Als nicht abschliessende Aufzählung seien z. B. Teigwaren (Pasta), Fleischprodukte, Gemüseprodukte und dergleichen hier genannt.

Vorzugsweise ist die Rehydriereinrichtung von der Penetriereinrichtung gebildet, die zumindest eine Flüssigkeitszuführung aufweist, so dass an einer Arbeitsposition der Vorrichtung das Öffnen der Kartusche wie auch das Rehydrieren des dehydrierten Lebensmittels erfolgt. Somit lässt sich die Taktzeit und somit der gesamte Zubereitungsvorgang zeitlich reduzieren. Des Weiteren entfällt eine neben der Penetriereinrichtung zusätzliche Rehydriereinrichtung, was die konstruktive Ausgestaltung der Vorrichtung vereinfacht, den Wartungsaufwand reduziert wie auch die Kosten für deren Herstellung senkt.

Vorteilhaft bildet zumindest ein Teil der Penetriermittel der Penetriereinrichtung einen Bestandteil der Flüssigkeitszuführung, was eine einfache konstruktive Ausgestaltung der Rehydriereinrichtung und vorteilhafte Rehydrierung des dehydrierten Lebensmittels ermöglicht. Beispielsweise sind einzelne oder alle Penetriermittel mit Zuführkanälen versehen, durch welche die Flüssigkeit zum Rehydrieren des dehydrierten Lebensmittels demselben zuführbar ist.

Die Zuführung der Flüssigkeit zum Rehydrieren des in der Kartusche befindlichem, dehydriertem Lebensmittels erfolgt bevorzugt während dem Penetrieren, womit sich die Taktzeit zusätzlich reduzieren lässt. Alternativ erfolgt die Zuführung nach dem Penetrieren der Kartusche, womit die Gefahr eines Austretens von Flüssigkeit ausserhalb der Kartusche vermieden wird. Weiter alternativ erfolgt die Zuführung während und auch nach dem Penetrieren, wodurch die Gesamtzeit für die Zuführung der definierten Menge von Flüssigkeit bezogen auf die Taktzeit der Vorrichtung massgeblich reduziert werden kann.

Vorteilhaft erfolgt die Zuführung der Flüssigkeit pulsierend, was eine gute Durchmischung des dehydrierten Lebensmittel und somit eine vorteilhafte Konsistenz des aufgequollenen Lebensmittel ohne zusätzliche Mischeinrichtung ermöglicht. Alternativ erfolgt die Zuführung der Flüssigkeit wechselseitig, d. h. die mehreren Flüssigkeitszuführungen werden abwechselnd und somit nicht gleichzeitig für die Zuführung der Flüssigkeit verwendet. Für eine besonders vorteilhafte Durchmischung des dehydrierten Lebensmittels mit Flüssigkeit wird diese pulsierend wie auch wechselseitig zugeführt.

Bevorzugt ist eine Wendeeinrichtung zum Wenden der Kartuschen vorgesehen, was eine einfache konstruktive Ausgestaltung der Vorrichtung und sicheren Transport der Kartusche in der Vorrichtung ermöglicht. Die penetrierte Kartusche wird mit der Wendeeinrichtung erst nach der Rehydration in eine Stellung gebracht, in welcher diese einfach auspressbar ist. Vorteilhaft ist die Wendeeinrichtung nach der Rehydriereinrichtung und vor der Auspresseinrichtung vorgesehen.

Weiter vorteilhaft ist die Wendeeinrichtung mit einer Hubeinrichtung gekoppelt, so dass vorteilhaft vor dem Wenden der Kartusche diese von dem Transportmittel abgehoben und/oder nach dem Wenden auf das Transportmittel abgesetzt wird. Mit der Hubeinrichtung wird das Wenden derselben wesentlich vereinfacht, da das Transportmittel oder dessen Aufnahme den Wendevorgang der Kartusche nicht behindert.

Beispielsweise wird die Kartusche von einer ersten Richtung her, bezogen auf die Schwerkraft vorteilhaft von oben her, mittels der Penetriereinrichtung penetriert und deren Inhalt rehydriert. Während dem Aufquellen des Lebensmittels wird die penetrierte Kartusche von dem Transportmittel weitertransportiert. Das Wenden erfolgt somit vorteilhaft zeitverzögert zum Rehydrieren. Hat das rehydrierte Lebensmittel eine bestimmte Konsistenz erreicht, wird dieses von der Wendeeinrichtung gewendet, vorteilhaft um 180°, so dass die von der Penetriereinrichtung geschaffenen Öffnungen nunmehr auf der gegenüberliegenden Seite, bezogen auf die Schwerkraft nach unten ausgerichtet, liegen. Nun kann die Auspresseinrichtung von der gleichen Richtung wie die Penetriereinrichtung her den Inhalt der Kartusche auspressen, wobei das ausgepresste Lebensmittel gegebenenfalls lediglich aufgrund der Schwerkraft der Zubereitungseinheit zugeführt wird.

Vorzugsweise ist eine Auswurfeinrichtung zum Entfernen der Kartuschen von dem Transportmittel vorgesehen, womit nachher die entsprechende Aufnahme beziehungsweise der Platz auf dem Transportmittel für die Zuführung einer neuen Kartusche mit noch dehydriertem Lebensmittel zur Verfügung steht. Vorteilhaft ist die Auswurfeinrichtung nach der Auspresseinrichtung vorgesehen, was einen einfachen Taktung der der Vorrichtung ermöglicht. Unter Auswurfeinrichtung wird in diesem Zusammenhang jede Art einer mechanischen und/oder konstruktiven Einrichtung verstanden, welche ein Entfernen der Kartusche von dem Transportmittel ermöglicht. Beispielsweise kann die Auswurfeinrichtung Hebel und/oder Federelemente oder eine aufgrund der Schwerkraft betriebene Lösung umfassen. Vorteilhaft wird eine Öffnung vorgesehen, durch welche die Kartusche, vorteilhaft mittels der Schwerkraft, von dem Transportmittel fallen oder von dieser entfernt werden kann.

Vorteilhaft wird die Kartusche verkleinert, damit lässt sich der Platzbedarf für einen Aufnahmebehälter zur Aufnahme der ausgepressten Kartuschen massgeblich reduzieren. Dies ist insbesondere vorteilhaft, wenn der Aufnahmebehälter für die ausgepressten Kartuschen innerhalb der Vorrichtung vorgesehen ist. Die Verkleinerung der Kartusche erfolgt vorteilhaft während dem Auspressen des zumindest teilweise rehydrierten Lebensmittels aus der Kartusche. Alternativ kann die Verkleinerung der Kartusche auch nach dem Auspressen derselben erfolgen. Des Weiteren kann die Verkleinerung auch zweistufig, d. h. während wie auch nach dem Auspressen derselben erfolgen.

Bevorzugt ist eine Lagereinrichtung zur Lagerung mehrerer Kartuschen vorgesehen, so dass mehrere Portionen des zubereitenden Lebensmittels über eine gewisse Zeit ohne Nachfüllen der Vorrichtung mit Kartuschen durch eine Hilfsperson zubereitet werden können. Vorteilhaft ist die Lagereinrichtung als Stapelmagazin ausgebildet, in welchem eine Vielzahl von Kartuschen übereinander angeordnet ist. Weiter vorteilhaft ist eine Überführeinrichtung vorgesehen, mittels derer die Kartuschen aus der Lagereinrichtung auf das Transportmittel überführbar sind. Die Überführeinrichtung kann beispielsweise in die Lagereinrichtung integriert oder als eine separate Einrichtung ausgebildet sein.

Besonders vorteilhaft ist die Lagereinrichtung austauschbar in der Vorrichtung angeordnet, so dass durch eine Hilfsperson eine leere Lagereinrichtung durch eine gefüllte Lagereinrichtung einfach und schnell ersetzt werden kann.

Vorzugsweise ist ein Flüssigkeitstank für das Rehydriermittel in der Vorrichtung vorgesehen, so dass mehrere Portionen des zubereitenden Lebensmittels über eine gewisse Zeit ohne Nachfüllen des Rehydriermittels durch eine Hilfsperson zubereitet werden können. Zusätzlich entfällt das Erfordernis eines Anschlusses zu einer externen Flüssigkeitseinheit. Als Rehydriermittel wird vorzugsweise Wasser verwendet. Das Wasser wird weiter vorteilhaft bei Raumtemperatur der Kartusche zugeführt, so dass eine Aufheizeinrichtung und/oder eine Kühleinrichtung für den einwandfreien Betrieb der Vorrichtung nicht erforderlich ist. Damit wird ein zusätzlicher Energiebedarf vermieden. Neben Wasser sind auch andere Rehydriermittel denkbar, solange diese zur Rehydration des dehydrierten Lebensmittel geeignet sind.

Besonders vorteilhaft ist der Flüssigkeitstank austauschbar in der Vorrichtung angeordnet, so dass durch eine Hilfsperson ein leerer Flüssigkeitstank durch einen gefüllten Flüssigkeitstank einfach und schnell ersetzt werden kann.

Der Flüssigkeitstank ist vorteilhaft - bezogen auf die Schwerkraft - oberhalb der Rehydriereinrichtung vorgesehen, so dass die auf die Flüssigkeit einwirkende Schwerkraft die Zuführung der Flüssigkeit zu der Rehydriereinrichtung erleichtert und eine etwaig vorhandene Pump- oder Druckeinrichtung eine lediglich auf die noch erforderliche Druckleistung ausgebildet sein muss.

Bevorzugt umfasst die Zubereitungseinrichtung eine Fritteuse, wobei das Zubereitungsmittel ein geeignetes Speiseöl beziehungsweise Fritieröl ist. Diese Ausgestaltung der Zubereitungseinrichtung ist zur Zubereitung z. B. von Kartoffel-Sticks, Gemüserollen oder dergleichen vorteilhaft. Die Zubereitungseinrichtung wird entsprechend der Art des Lebensmittels gewählt und könnte daher auch einen Ofen oder ein Mikrowellengerät umfassen.

Vorzugsweise umfasst das Transportmittel einen Drehteller, der von einem Motor entsprechend der vorgegebenen Taktzeit beziehungsweise der erforderlichen Zeitinterwalle für die einzelnen Verfahrensschritte um eine Rotationsachse gedreht wird. Alternativ oder ergänzend zu einem Drehteller umfasst das Transportmittel ein Transportband. Weiter alternativ oder ergänzend dazu umfasst das Transportmittel eine Manipuliereinheit, welche beispielsweise mechanisch, hydraulisch und/oder pneumatisch ausgebildet ist. Vorteilhaft umfasst die Manipuliereinheit einen Roboterarm.

Eine vorteilhaft ausgestaltete Kartusche für eine vorgenannte Vorrichtung beziehungsweise zur Verwendung in einem vorgenannten Verfahren weist einen Bodenabschnitt, einen Wandabschnitt und einen Deckelabschnitt auf, wobei diese Abschnitte einen Aufnahmeraum für das dehydrierte Lebensmittel begrenzen, und wobei benachbart zum Deckelabschnitt ein Siebelement vorgesehen ist.

Der Aufnahmeraum der Kartusche weist eine Grösse auf, welche zur Aufnahme des dehydrierte Lebensmittels sowie zur Aufnahme des rehydrierten und somit ausdehnten Lebensmittels ausreicht.

Da das Siebelement Bestandteil der Kartusche ist, wird dieses mit der ausgepressten Kartusche entsorgt. Es bleiben daher kaum Rückstände des ausgepressten Lebensmittels im Inneren der Vorrichtung zurück, was den Reinigungs- wie auch den Wartungsaufwand für die Vorrichtung niedrig hält. Das Siebelement wird vorzugsweise aus einem rezyklierbaren und/oder biologisch abbaubaren Material gefertigt, beispielsweise aus einem geeigneten Kunststoff. Als besonders vorteilhaft hat sich ein biologisch abbaubarer Kunststoff für die Fertigung des Siebelements erwiesen.

Weiter vorteilhaft ist die Kartusche aus einem einfach rezyklierbaren und/oder biologisch abbaubaren Material gefertigt. Besonders bevorzugt wird die Kartusche aus einem biologisch abbaubaren Karton oder biologisch abbaubaren Kunststoff gefertigt.

Der Deckelabschnitt der Kartusche umfasst vorteilhaft eine Versiegelungsfolie, welche das dehydrierte Lebensmittel bis zur Penetration der Kartusche durch die Penetrationseinrichtung vor äusseren Einflüssen, wie z. B. Feuchtigkeit, Gerüche oder Bakterien schützt. Der Deckelabschnitt beziehungsweise die Versiegelungsfolie sind vorteilhaft mittels der Penetrierungsmittel der Penetrierungseinrichtung penetrierbar. Der Deckelabschnitt ist vorzugsweise aus einem rezyklierbaren und/oder biologisch abbaubaren Material gefertigt, beispielsweise aus einem geeigneten Kunststoff, Karton oder Verbundwerkstoff Als besonders vorteilhaft hat sich ein biologisch abbaubarer Kunststoff für die Fertigung des Deckelabschnitts erwiesen.

Die Ausgestaltung der Form der Kartusche ist im Wesentlichen von den vorhandenen konstruktiven Randbedingungen abhängig und kann daher mehreckig, oval oder rund sein. Eine runde Ausgestaltung, welche gegebenenfalls in Richtung des Bodenabschnitts sich konisch verjüngt, lässt sich beim Auspressen leicht verkleinern beziehungsweise zusammenfalten und weist beispielsweise aus logistischen Überlegungen vorteilhafte Eigenschaften auf.

Eine weitere vorteilhafte Variante stellt eine Ausgestaltung der Form der Kartusche mit einem quadratischen Querschnitt dar, insbesondere im Hinblick auf eine korrekte Ausrichtung der Kartusche innerhalb der Vorrichtung.

Der Wandabschnitt der Kartusche ist vorteilhaft zusammendrückbar, womit die Kartusche einfach verkleinert werden kann.

Insbesondere bei einer sich konisch oder pyramidenförmig verjüngend ausgebildeten Ausgestaltung der Kartusche, d. h. bei einer Kartusche mit einem schräg gestellten Wandabschnitt, wird an dem Wandabschnitt, vorteilhaft umfänglich verlaufend, zumindest eine Stufung vorgesehen. Dadurch wird der Kraftaufwand zum Verkleinern beziehungsweise zum Zusammenfalten der Kartusche massgeblich reduziert.

Am Bodenabschnitt, abgewandt von dem Aufnahmeraum, abragend ist weiter vorteilhaft ein, idealerweise umlaufender Kragenabschnitt vorgesehen, welcher beispielsweise mit einem Auspressmittel der Auspresseinrichtung in Wirkverbindung bringbar ist oder zu dessen Führung dient. Mit einem solchen Kragenabschnitt wird ein einwandfreies Auspressen der Kartusche erleichtert, da die Kartusche so nicht aus der Auspressrichtung ausweichen kann.

Vorteilhaft ist das Siebelement zwischen dem Deckelabschnitt und dem Bodenabschnitt vorgesehen, so dass der Deckelabschnitt auch das Siebelement bis zur Penetration der Kartusche durch die Penetrationseinrichtung vor äusseren Einflüssen schützt. Vorteilhaft ist das Siebelement benachbart und weiter vorteilhaft direkt benachbart zu dem Deckelabschnitt angeordnet. Wird die Kartusche im Bereich des Deckelabschnitts penetriert, stützt das innenliegende Siebelement den Decklabschnitt während dem Penetriervorgang bereichsweise ab, wodurch die Kartusche einfacher öffenbar ist.

Vorteilhaft ist zumindest ein Positioniermittel an der Kartusche zur Positionierung der Kartusche in der Vorrichtung vorgesehen, womit die Kartusche entsprechend des vorzunehmenden Bearbeitungsschritt mit entsprechend ausgebildetem Gegenmittel in der Vorrichtung ausrichtbar ist.

Vorteilhaft weist das Siebelement sich verengende Öffnungen auf, welche einfach die gewünschte Formgebung des zubereitenden Lebensmittels beim Auspressen des rehydrierten Lebensmittels aus der Kartusche gewährleisten.

Vorteilhaft verengen sich die Öffnungen in Richtung des Bodenabschnitts, was die Formgebung des rehydrierten Lebensmittels beim Auspressen aus der Kartusche zusätzlich unterstützt.

Alternativ oder ergänzend dazu sind die Öffnungen im Öffnungsquerschnitt viereckig ausgebildet, was die Formgebung des rehydrierten Lebensmittels beim Auspressen aus der Kartusche ebenfalls zusätzlich unterstützt.

Wird die Kartusche im Bereich des Siebelements durch dessen Öffnungen hindurch penetriert, gewährleisten derartige Öffnungen eine Ausrichtung und Führung der Penetrierungsmittel der Penetrierungseinrichtung beim Penetrieren der Kartusche.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung beschrieben sind.

Die Bezugszeichenliste ist wie auch der technische Inhalt der Patentansprüche und Figuren Bestandteil der Offenbarung. Die Figuren werden zusammenhängend und übergreifend beschrieben. Gleiche Bezugszeichen bedeuten gleiche Bauteile, Bezugszeichen mit unterschiedlichen Indices geben funktionsgleiche oder ähnliche Bauteile an. Es zeigen dabei:
- Fig. 1: eine erfindungsgemässe Vorrichtung in einer schematischen Ansicht,
- Fig. 2: eine Transporteinheit der erfindungsgemässen Vorrichtung in einer Aufsicht,
- Fig. 3: die Transporteinheit gemäss Figur 2 in einer perspektivischen Darstellung,
- Fig. 4: eine Kartusche in einer perspektivischen Darstellung
- Fig. 5: die Kartusche gemäss Figur 4 in einer perspektivischen Schnittdarstellung,
- Fig. 6: eine Variante eines Transportmittels einer Transporteinheit,
- Fig. 7: eine weitere Variante eines Transportmittels einer Transporteinheit,
- Fig. 8: eine Penetriereinrichtung mit mehreren Penetriermitteln in einer perspektivischen Ansicht, und
- Fig. 9: die Penetriermittel gemäss Fig. 8 in einem vergrösserten Detailschnitt.

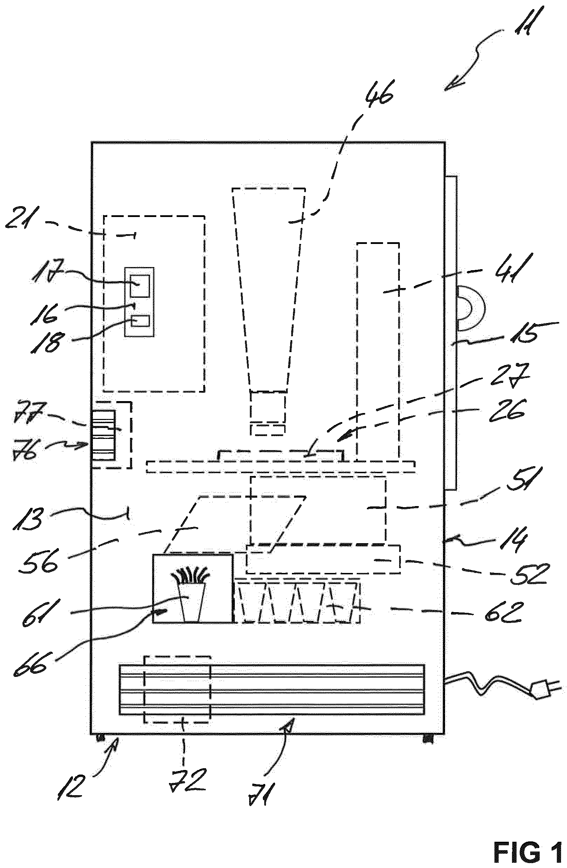

Fig. 1 zeigt eine Vorrichtung 11 zur automatischen Zubereitung von dehydrierten Lebensmitteln beispielhaft als Kartoffel-Sticks-Vollautomat. Die Vorrichtung 11 weist ein im Wesentlichen quaderförmiges, umfänglich geschlossenes Gehäuse 12 aus Metall, Kunststoff oder einer Kombination davon auf, wobei in dieser Darstellung eine Ansicht der Frontseite 13 gezeigt ist. In dem umfänglich geschlossenen Gehäuse 12 sind die notwendigen Komponenten der Vorrichtung 11 angeordnet. Die dargestellte Anordnung der Komponenten der Vorrichtung 11 relativ zueinander ist hier beispielhaft. Je nach Ausgestaltung der Vorrichtung 11 und der Komponenten an sich können die einzelnen Komponenten auch anders im Gehäuse 12 angeordnet sein.

An der Frontseite 13 ist ein Bedienerpanel 16 mit einem Display 17 und einem Zahlungsmittelterminal 18 vorgesehen. Der Zahlungsmittelterminal 18 dient der Bezahlung einer Portion von Kartoffel-Sticks und kann beispielsweise Münzen, Jetons, Kreditkarten, Prepaid-Karten oder andere Arten von Zahlungsmitteln verarbeiten. Der Zahlungsmittelterminal 18 ist vorteilhaft diebstahlsicher ausgebildet.

Weiter ist eine Steuerungseinheit 21 in dem Gehäuse vorgesehen, mittels derer die Zubereitung des Lebensmittels, hier der Kartoffel-Sticks, und somit vorteilhaft aller Komponenten der Vorrichtung 11 gesteuert werden. Die Steuerungseinheit 21 ist mit dem Bedienerpanel 16 gekoppelt, so dass spätestens nach Abschluss des Bezahlvorgangs die Zubereitung des Lebensmittels gestartet wird. In einem Datenspeicher der Steuerungseinheit 21 ist ein Steuerungsprogramm hinterlegt, welche beispielsweise über ein Modem (hier nicht dargestellt) ferngewartet werden kann.

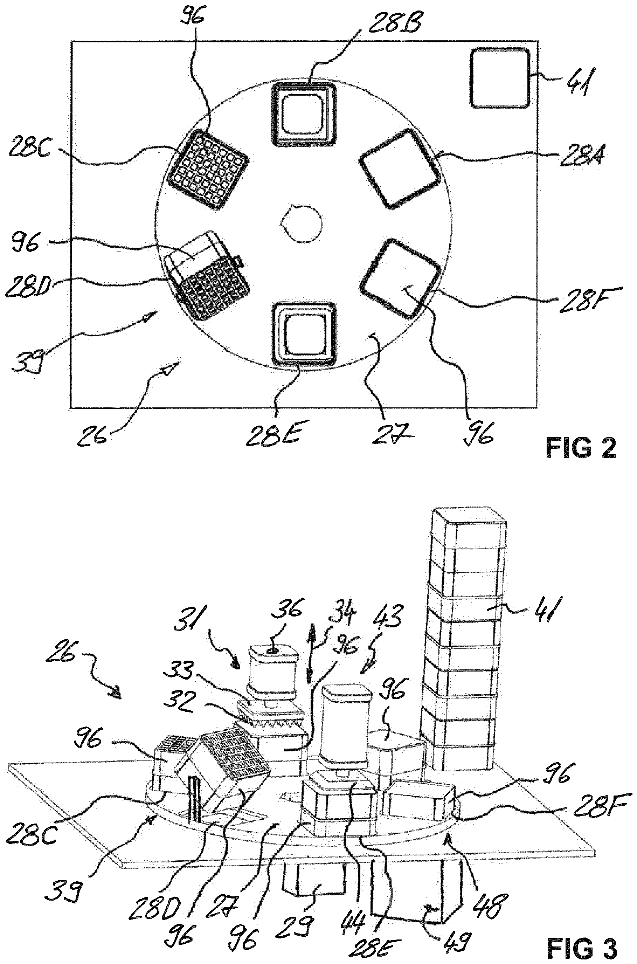

Weiter ist in dem Gehäuse 12 eine Transporteinheit 26 vorgesehen, von der in Figur 1 lediglich das Transportmittel 27 zum Transportieren des zubereitenden, in einer Kartusche 96 vorgesehenen dehydrierten Lebensmittels dargestellt ist. Die Ausbildung der Transporteinheit 26 wird nachfolgend im Zusammenhang mit den Figuren 2 und 3 noch detailliert beschrieben.

Bezogen auf die Darstellung gemäss Fig. 1 oberhalb der Transporteinheit 26 ist in dem Gehäuse 12 eine Lagereinrichtung 41 für mehrere Kartuschen wie auch ein Flüssigkeitstank 46 für das Rehydriermittel, hier Wasser, vorgesehen. An einer Seitenwand 14 des Gehäuses 12 ist eine Servicetür 15 vorgesehen, über welche das Innere des Gehäuses 12 zugänglich ist. Die Lagereinrichtung 41 wie auch der Flüssigkeitstank 46 sind austauschbar in dem Gehäuse 12 angeordnet, womit der Ersatz einer leeren Lagereinrichtung 41 durch eine volle Lagereinrichtung wie auch eines leeren Flüssigkeitstanks 46 durch einen vollen Flüssigkeitstank einfach und somit auch durch Hilfspersonen erfolgen.

Bezogen auf die Darstellung gemäss Fig. 1 unterhalb der Transporteinheit 26 ist eine Zubereitungseinrichtung 51 zum Zubereiten des Lebensmittels vorgesehen. Die Zubereitungseinrichtung 51 umfasst eine Fritteuse und das Zubereitungsmittel ist hier ein zum Frittieren geeignetes Speiseöl. Das zubereitende Lebensmittel, hier Kartoffel-Sticks, wird in der Zubereitungseinrichtung 51 auf einer definierten Zeit- und Temperaturachse erhitzt. Weiter umfasst die Zubereitungseinrichtung 51 ein Speiseölbehälter 52, der vorteilhaft mit einer Restölgewinnung und/oder einer Ölreinigungseinheit gekoppelt ist.

Sobald die Kartoffel-Sticks fertig zubereitet sind, werden diese aus dem Ölbad der Zubereitungseinrichtung 51 entnommen - z. B. aus dieser heraus gehoben und abgetropft - und über ein Fördersystem 56, z. B. eine Rampe oder ein Förderband, zu einer Verbraucherpackung 61, hier ein Becher, befördert. Der Konsument kann nun die fertig zubereiteten Kartoffel-Sticks aus der Ausgabeeinrichtung 66 (Entnahmestation) entnehmen und anschliessend verzehren. Der Ausgabeeinrichtung 66 ist eine Speichereinheit 62 für mehrere Verbraucherpackungen 61 vorgeschaltet, über welche für jede neue Portion von Kartoffel-Sticks eine neue Verbraucherpackung 61 der Ausgabeeinrichtung 66 zuführbar ist.

Eine erste Filtereinheit 71 mit einem ersten Gebläse 72 ist an dem Gehäuse 12 vorgesehen. Durch das erste Gebläse 72 wird bedarfsweise Frischluft durch einen Filter in das Innere des Gehäuses 12 insbesondere zur Kühlung der einzelnen Komponenten zugeführt oder Verbrauchsluft aus dem Inneren des Gehäuses 12 abgeführt.

Weiter ist eine zweite Filtereinheit 76 mit einem zweiten Gebläse 77 vorgesehen. Durch das zweite Gebläse 77 wird ebenfalls bedarfsweise Frischluft durch einen Filter in das Innere des Gehäuses 12 insbesondere zur Kühlung der einzelnen Komponenten zugeführt oder Verbrauchsluft aus dem Inneren des Gehäuses 12 abgeführt.

Die Filter der ersten Filtereinheit 71 und der zweiten Filtereinheit 76 gewährleisten eine saubere und geruchsfreie Umgebung. Beispielsweise umfasst ein geeigneter Filter einen Kohlenfilter. Weiter wird eine saubere und geruchsfreie Umgebung durch eine gezielte Luftumwälzung und/oder über die Restölgewinnung gewährleistet.

Wie bereits vorher dargelegt, umfasst die in den Fig. 2 und 3 detaillierter dargestellte Transporteinheit 26 einen Drehteller als Transportmittel 27, wobei der Drehteller mit sechs Aufnahmen 28A-F zur Aufnahme und temporären Halterung der Kartuschen 96 während des Transports versehen ist. Das Transportmittel 27 ist um sein Zentrum herum mittels eines Motors 29 getaktet drehbar.

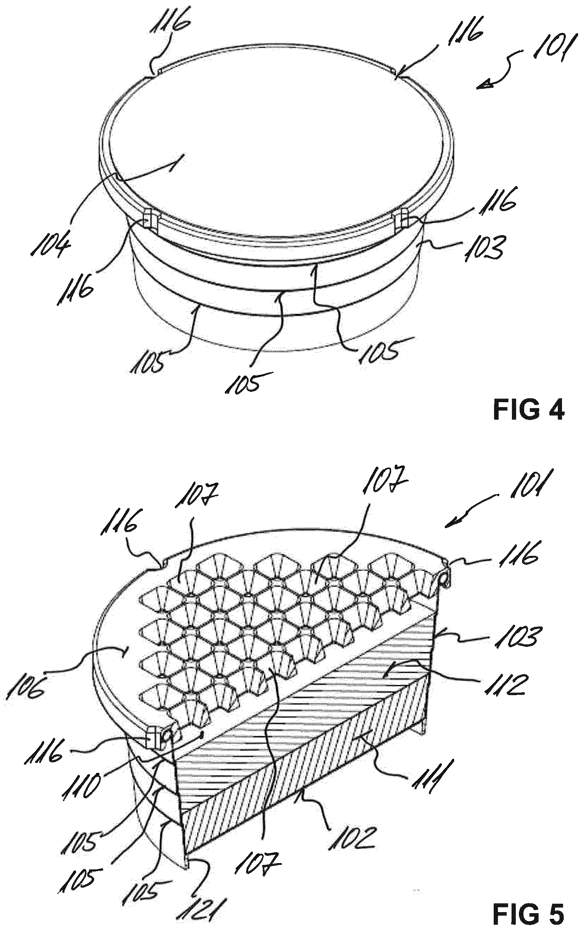

Aus der als Stapelmagazin ausgebildete Lagereinrichtung 41 wird eine Kartusche 96 in die Aufnahme 28A überführt. Anschliessend wird das Transportmittel 27 um 60° gegen den Uhrzeigersinn gedreht, so dass die zuvor überführte Kartusche 96 an der Position der Aufnahme 28B zu liegen kommt. An dieser Position ist eine Penetriereinrichtung 31 mit mehreren Penetriermittel 32 an einer Basisplatte 33 zum Penetrieren der Kartusche 96 vorgesehen. Die Penetriermittel 32 sind einteilig mit der Basisplatte 33 ausgebildet. Die Basisplatte 33 ist Bestandteil einer Zylinder-/Kolbenanordnung und ist mittels dieser in Richtung des Doppelpfeils 34 verfahrbar. Die Anzahl der Penetriermittel 32 entspricht vorteilhaft genau der Anzahl der Öffnungen des Siebelements der Kartusche 96, welches nachfolgend noch anhand der Kartusche 101 im Detail in zu den Fig. 4 und 5 beschrieben wird. Alternativ beträgt die Anzahl der Penetriermittel 32 weniger als die Anzahl der Öffnungen des entsprechenden Siebelements der Kartusche.

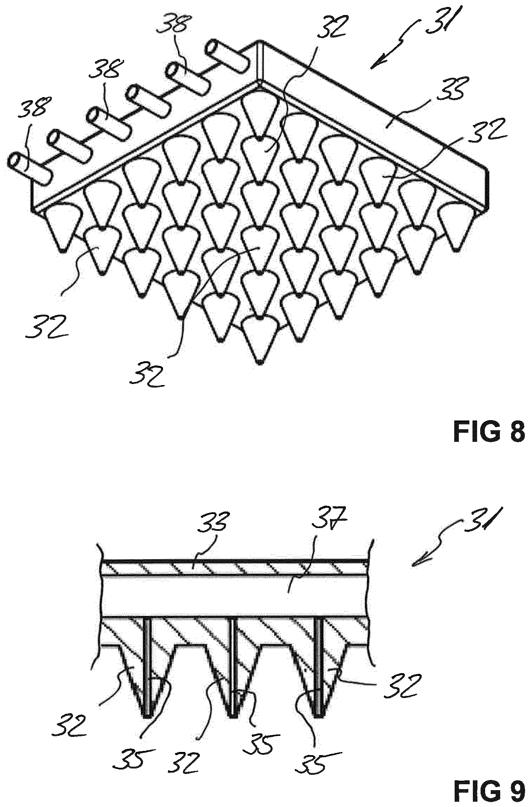

Die Penetriermittel 32 der Penetriereinrichtung 31 sind nadelartig ausgebildet (siehe Figuren 8 und 9), um die Kartusche 96 in der gewünschten Art einfach penetrieren zu können. Vorteilhaft alle Penetriermittel 32 weisen eine Flüssigkeitszuführung in Form eines Kanals 35 auf. Die Kolbenanordnung der Penetriereinrichtung 31 kann einen Durchführkanal 36 aufweisen, der die Zuführung von Flüssigkeit aus dem Flüssigkeitstank 46 zu den Kanälen 35 der einzelnen Penetriermittel 32 über in der Basisplatte 33 vorgesehene Verteilkanäle 37 ermöglicht. Bei der hier gezeigten Penetriereinrichtung 31 sind seitlich von der Basisplatte 33 abragende Anschlüsse 38 vorgesehen, welche mit den Verteilkanälen 37 verbunden sind. Die Rehydriereinrichtung zum Rehydrieren des dehydrierten Lebensmittels ist somit von der Penetriereinrichtung 31 gebildet, wobei die Penetriermittel 32 vorteilhaft Einspritzdüsen der Rehydriereinrichtung ausbilden.

Zum Penetrieren der Kartusche 96 wird die Basisplatte 33, in dieser Darstellung, nach unten verfahren, bis die Penetriermittel 32 ausreichend in die entsprechende Seite der Kartusche 96 eingedrungen sind. Anschliessend wird die Flüssigkeit, hier Wasser, in einer genau definierten Menge vorteilhaft pulsierend und wechselseitig in die Kartusche 96 und somit in das dehydrierte Lebensmittel eingespritzt, wobei sich die Flüssigkeit und das dehydrierte Lebensmittel vermischen. Die Menge der Flüssigkeit ist im Wesentlichen von der Art und der Konsistenz des dehydrierten Lebensmittel beziehungsweise von der gewünschten Konsistenz des rehydrierten Lebensmittels zu dessen weiterer Verarbeitung abhängig.

Nach Abschluss der Flüssigkeitszuführung wird das Transportmittel 27 um 60° rotiert, wobei an der Position der Aufnahme 28C die Kartusche 96 lediglich ruht und der Rehydrationsvorgang des Lebensmittels fortschreiten kann.

Nach einer weiteren Rotation des Transportmittels 27 (Position 28D) um 60° wird die Kartusche 96 mittels einer Wendeeinrichtung 39 um 180° um eine parallel zu der von dem Transportmittel 27 aufgespannten Ebene verlaufende Achse gewendet, so dass die penetrierte Seite der Kartusche 96, auf diese Darstellung bezogen, nach unten zu liegen kommt. Die Wendeeinrichtung 39 umfasst vorteilhaft eine Hubeinrichtung, welche ein Anheben der Kartusche 96 vor dem Wenden aus der Aufnahme 28D und somit einfaches Wenden der Kartusche 96 ermöglicht. Weiter ermöglicht eine solche Hubeinrichtung das Absetzen der Kartusche 96 nach dem Wenden. Das rehydrierte Lebensmittel weist an dieser Position vorteilhaft einen Konsistenz auf, in welcher das Lebensmittel nicht durch die Schwerkraft selbstständig aus den penetrierten Öffnungen ausfliesst.

Nach einer weiteren Rotation des Transportmittels 27 (Position 28E) um 60° befindet sich die Kartusche 96 bei einer Auspresseinrichtung 43. Die Auspresseinrichtung 43 ist eine Zylinder-/Kolbenanordnung und umfasst eine Druckplatte 44, mittels derer das zumindest teilweise rehydrierte Lebensmittel auspressbar ist. Das ausgepresste Lebensmittel fällt aufgrund der Schwerkraft in die Zubereitungseinheit 51, in welcher es zubereitet wird.

Vorteilhaft wird beim Auspressvorgang die Kartusche 96 zusammengedrückt beziehungsweise verkleinert und so in Ihrer Höhe reduziert.

Nach dem Abschluss des Auspressvorgang wird das Transportmittel 27 nochmals um 60° rotiert. An dieser Position (Position 28E) ist eine Auswurfeinrichtung 48 zum Entfernen der ausgepressten Kartusche 96 von dem Transportmittel 27 vorgesehen. Die Auswurfeinrichtung 48 umfasst hier eine Öffnung unterhalb des Transportmittels 27 bei der Position 28E, so dass die ausgepresste Kartusche - vorteilhaft aufgrund der Schwerkraft - durch die Öffnung in einen - bezogen auf die gezeigte Darstellung - unterhalb der Transporteinrichtung 26 angeordneten Abfallbehälter 49 fällt.

Für einen fortlaufenden Betrieb ist vorteilhaft in jeder Aufnahme 28A-F eine Kartusche 96 positioniert, so dass in kurzer Zeit mehrere Portionen von Kartoffel-Sticks von der Vorrichtung 11 zur Verfügung gestellt werden. Nach jeder Rotation des Transportmittels 27 wird vorteilhaft an jeder Position der entsprechende, zuvor beschriebene Verfahrensschritt ausgeführt.

Die Steuereinheit kann auch beispielsweise in Abhängigkeit der Uhrzeit die Vorrichtung 11 selbstständig oder ferngesteuert in Betrieb setzen, damit zu einem bestimmten Zeitpunkt (beispielsweise zur lokalen Mittagszeit) das zubereitete Lebensmittel nach einem effektiv durchgeführten Bezahlvorgang schnell dem Konsumenten zur Verfügung steht.

Weiter wird die Vorrichtung 11 von der Steuerungseinheit 21 vorteilhaft in ungenutzten Zeiträumen beziehungsweise nach einem bestimmten Zeitraum ohne Nutzung derselben auf ein Standby-Mode gesetzt, womit sich der Energieverbrauch der Vorrichtung 11 reduzieren lässt.

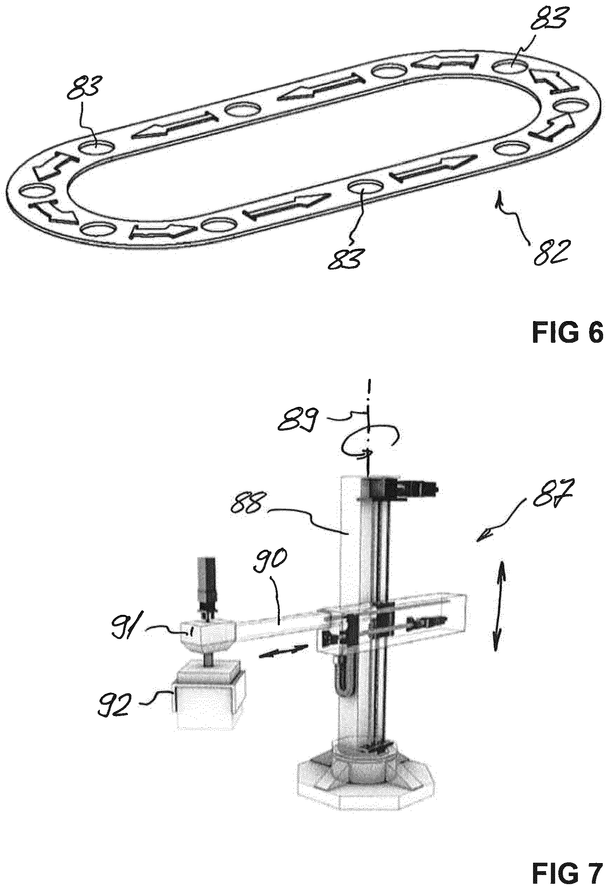

Das in Fig. 6 gezeigte Transportmittel 82 ist ein Transportband, das mit mehreren, vorteilhaft in einem vorbestimmten gleichmässigen Abstand zueinander angeordneten Aufnahmen 83 versehen ist. Das Transportband ist beispielsweise mehrgliedrig ausgebildet.

Das in Fig. 7 dargestellte Transportmittel 87 ist eine mehrachsige Manipuliereinheit, hier in Form eines Roboterarms. Das Transportmittel 87 umfasst einen vertikal ausgerichteten Ständer 88, der um eine Vertikalachse 89 vorteilhaft um 360° rotierbar ist. Ein Manipulierarm 90 ist vorteilhaft in Richtung der Vertikalachse 89 entlang des Ständers 88 verfahrbar und weiter vorteilhaft auch senkrecht zur Richtung der Vertikalachse 89 und somit relativ zum Ständer 88 verfahrbar. Am freien Ende 91 des Manipulierarms 90 ist eine Greifereinheit 92 vorgesehen, mit welcher die Kartusche 96 transportiert und entsprechend des Bearbeitungsvorgang positioniert werden kann. Die Greifereinheit 92 ist vorteilhaft verschwenkbar und/oder entlang mehrerer Achsen verfahrbar an dem Manipulierarm 90 angeordnet.

Weiter könnte das Transportmittel 87 auch für das Handling der zubereiteten Kartoffel-Sticks verwendet werden, nämlich zur Entnahme derselben aus der Zubereitungseinheit 51 und zur Zuführung derselben zu der Ausgabeeinrichtung 66.

Je nach konstruktiver Ausgestaltung der Vorrichtung 11 können ohne weiteres zwei oder mehr Transportmittel, die auch verschieden ausgebildet sein können, in einer Vorrichtung 11 kombiniert werden. Beispielsweise könnte das als Manipuliereinheit ausgebildete Transportmittel 87 der Zuführung der Kartusche 96 auf ein als Drehteller ausgebildetes Transportmittel 27 dienen. In dieser Kombination wäre das als Manipuliereinheit ausgebildete Transportmittel 87 auch als Wendeeinrichtung und/oder als Auswurfeinrichtung verwendbar.

In den Fig. 4 und 5 ist eine Kartusche 101 dargestellt. Die in den anderen Figuren dargestellte Kartusche 96 entspricht bis auf deren Form der Kartusche 101, weshalb die nachfolgenden Ausführungen sinngemäss auch für diese gelten.

Die Kartusche 101 für eine Vorrichtung 11 weist einen Bodenabschnitt 102, einen Wandabschnitt 103 und einen Deckelabschnitt 104 auf, die zusammen einen Aufnahmeraum 110 für das dehydrierte Lebensmittel 111 begrenzen. Der Aufnahmeraum 110 weist eine ausreichende Grösse zur Aufnahme auch des ausgedehnten, rehydrierten Lebensmittel 112 auf.

Der Deckelabschnitt 104 ist eine Versiegelungsfolie, die von der Penetriereinrichtung 31 penetrierbar ist.

Benachbart zum Deckelabschnitt 104 ist zwischen dem Deckelabschnitt 104 und dem Bodenabschnitt 102 ein Siebelement 106 vorgesehen. Das Siebelement 106 weist mehrere sich verengende Öffnungen 107 auf. Die Öffnungen 107 verengen sich in Richtung des Bodenabschnitts 102 und sind im Öffnungsquerschnitt viereckig ausgebildet. Die Ausgestaltung der Öffnungen 107 ist vorteilhaft auf die Ausgestaltung der Penetriermittel 32 der Penetriereinrichtung 31 beziehungsweise umgekehrt abgestimmt. Aufgrund dieser Abstimmung werden die Penetriermittel 32 beim Penetrieren des Deckelabschnitts 104 geführt. Die penetrierten Abschnitte des Deckelabschnitts 104, insbesondere wenn dieser als Versiegelungsfolie ausgebildet ist, werden beim Penetriervorgang vorteilhaft an die Innenwandungen der Öffnungen 107 angelegt, so dass diese Abschnitte des Deckelabschnitts 104 die Formgebung des rehydrierten Lebensmittels beim Auspressvorgang desselben nicht behindern.

An der äusseren Peripherie der Kartusche 101, hier im Bereich des Deckelabschnitts 104, sind - in diesem Ausführungsbeispiel - umfänglich gleichmässig verteilt vier Nuten als Positioniermittel 116 vorgesehen. Diese Positioniermittel 116 ermöglichen eine einfache Positionierung der Kartusche 101 in der Vorrichtung 11. Vorteilhaft sind bei jeder Aufnahme 28A-F des Transportmittels 27 entsprechend der Positioniermittel 116 ausgebildete Gegenmittel zur Führung der Kartuschen 101 vorgesehen.

Von dem Bodenabschnitt 102 ragt umfänglich ein Kragenabschnitt 121 ab. Die Druckplatte 44 der Auspresseinrichtung 43 weist vorteilhaft Dimensionen auf, welche kleiner als der von dem Kragenabschnitt 121 sind, vorteilhaft nur geringfügig kleiner. Alternativ weist die Druckplatte 44 der Auspresseinrichtung 43 eine auf den Kragenabschnitt 121 der Kartusche 101 abgestimmte Ausnehmung vor, in welcher der Kragenabschnitt 121 beim Auspressvorgang zu liegen kommt. Der Kragenabschnitt 121 ermöglicht bei beiden Varianten einen zentrierten und damit vollständigen Auspressvorgang ohne die Gefahr eines Verkippens der Kartusche 101.

Die Kartusche 101 weist eine sich in Richtung des Bodenabschnitts 102 verjüngende Ausgestaltung auf. Der Wandabschnitt 103 ist in diesem Ausführungsbeispiel entlang seiner Erstreckung vom Bodenabschnitt 102 bis zum Deckelabschnitt 104 mit drei, umfänglich verlaufenden und zueinander, vorteilhaft gleichmässig, beabstandeten Stufungen 105 versehen, welche das Zusammenfalten der Kartusche 101 bereits beim Aufbringen von geringem Druck auf den Bodenabschnitt 102 vereinfachen.

**Bezugszeichenliste**

| | | | |
|---|---|---|---|
| 11 | Vorrichtung | 46 | Flüssigkeitstank |
| 12 | Gehäuse v. 12 | | |
| 13 | Frontseite | 48 | Auswurfeinrichtung |
| 14 | Seitenwand v. 12 | 49 | Abfallbehälter f. 96 |
| 15 | Servicetür | 51 | Zubereitungseinrichtung |
| 16 | Bedienerpanel | 52 | Speiseölbehälter |
| 17 | Display | | |
| 18 | Zahlungsmittelterminal | 56 | Fördersystem |
| | | | |
| 21 | Steuerungseinheit | 61 | Verbraucherpackung |
| | | 62 | Speichereinheit |
| 26 | Transporteinheit | | |
| 27 | Transportmittel | 66 | Ausgabeeinrichtung |
| 28A-F | Aufnahme v. 27 | | |
| 29 | Motor f. 27 | 71 | 1. Filtereinheit |
| | | 72 | 1. Gebläse v. 71 |
| 31 | Penetriereinrichtung | | |
| 32 | Penetriermittel | 76 | 2. Filtereinheit |
| 33 | Basisplatte | 77 | 2. Gebläse v. 76 |
| 34 | Doppelpfeil | | |
| 35 | Kanal v. 32 | 82 | Transportmittel |
| 36 | Durchführkanal | 83 | Aufnahme v. 82 |
| 37 | Verteilkanal | | |
| 38 | Anschluss zu 37 | 87 | Transportmittel |
| 39 | Wendeeinrichtung | 88 | Ständer |
| | | 89 | Vertikalachse |
| 41 | Lagereinrichtung | 90 | Manipulierarm |
| | | 91 | freies Ende v. 90 |
| 43 | Auspresseinrichtung | 92 | Greifereinheit |
| 44 | Druckplatte | | |
| | | 96 | Kartusche |
| 101 | Kartusche | 110 | Aufnahmeraum |
| 102 | Bodenabschnitt | 111 | dehydriertes Lebensmittel |
| 103 | Wandabschnitt | 112 | rehydriertes Lebensmittel |
| 104 | Deckelabschnitt | | |
| 105 | Stufung | 116 | Positioniermittel |
| 106 | Siebelement | | |
| 107 | Öffnung | 121 | Kragenabschnitt |

## Patentansprüche

1. Vorrichtung zur automatischen Zubereitung von dehydrierten Lebensmitteln (111)
mit einem Transportmittel (27, 82, 87) zum Transportieren des zubereitenden Lebensmittels (111) in der Vorrichtung (11),
mit einer Rehydriereinrichtung zum Rehydrieren des dehydrierten Lebensmittels (111),
mit einer Auspresseinrichtung (43) zum Auspressen des zumindest teilweise rehydrierten Lebensmittels,
mit einer Zubereitungseinrichtung (51) zum Zubereiten des Lebensmittels sowie
mit einer Ausgabeeinrichtung (66) zur Ausgabe des zubereiteten Lebensmittels, **dadurch gekennzeichnet, dass**
das dehydrierte Lebensmittel (111) in einer Kartusche (96; 101) vorgesehen ist und
eine Penetriereinrichtung (31) mit Penetriermittel (32) zum Penetrieren der Kartusche (96; 101) vorgesehen ist.

2. Vorrichtung nach Anspruch 1, **dadurch gekennzeichnet, dass** die Rehydriereinrichtung von der Penetriereinrichtung (31) gebildet ist, die zumindest eine Flüssigkeitszuführung aufweist, wobei vorteilhaft zumindest ein Teil der Penetriermittel (32) der Penetriereinrichtung (31) einen Bestandteil der Flüssigkeitszuführung bildet.

3. Vorrichtung nach Anspruch 1 oder 2, **dadurch gekennzeichnet, dass** eine Wendeeinrichtung (39) zum Wenden der Kartuschen (96; 101), vorteilhaft nach der Rehydriereinrichtung und vor der Auspresseinrichtung (43), vorgesehen ist, wobei weiter vorteilhaft die Wendeeinrichtung (39) mit einer Hubeinrichtung gekoppelt ist.

4. Vorrichtung nach einem der Ansprüche 1 bis 3, **dadurch gekennzeichnet, dass** eine Auswurfeinrichtung (48) zum Entfernen der Kartuschen (96; 101) von dem Transportmittel (27; 82; 87), vorteilhaft nach der Auspresseinrichtung (43), vorgesehen ist.

5. Vorrichtung nach einem der Ansprüche 1 bis 4, **dadurch gekennzeichnet, dass** eine Lagereinrichtung (41) zur Lagerung mehrerer Kartuschen (96; 101) vorgesehen ist und/oder ein Flüssigkeitstank (46) für das Rehydriermittel, vorzugsweise Wasser, vorgesehen ist, wobei vorteilhaft die Lagereinrichtung (41) und/oder der Flüssigkeitstank (46) austauschbar in der Vorrichtung (11) angeordnet sind.

6. Vorrichtung nach einem der Ansprüche 1 bis 5, **dadurch gekennzeichnet, dass** die Zubereitungseinrichtung (51) eine Fritteuse umfasst, wobei das Zubereitungsmittel ein geeignetes Speiseöl ist.

7. Vorrichtung nach einem der Ansprüche 1 bis 6, **dadurch gekennzeichnet, dass** das Transportmittel einen Drehteller (27) und/oder ein Transportband (82) und/oder eine Manipuliereinheit (87), vorteilhaft einen Roboterarm, umfasst.

8. Verfahren zur automatischen Zubereitung von dehydrierten Lebensmitteln (111) mit einer Vorrichtung (11) nach einem der Ansprüche 1 bis 7, wobei das dehydrierte Lebensmittel (111) in einer Kartusche (96; 101) vorgesehen ist, **gekennzeichnet durch** die Schritte:
a) Befördern der Kartusche (96; 101) zur Penetriereinrichtung (31) mittels des Transportmittels (27; 82; 87),
b) Penetrieren der Kartusche (96; 101) mittels der Penetriereinrichtung (31),
c) Rehydrieren des dehydrierten Lebensmittels (111) mittels einer Flüssigkeit,
d) Auspressen des zumindest teilweise rehydrierten Lebensmittels aus der Kartusche (96; 101) mittels der Auspresseinrichtung (43),
e) Zubereiten des ausgepressten Lebensmittels in der Zubereitungseinrichtung (51), und
f) Ausgeben des zubereiteten Lebensmittels in der Ausgabeeinrichtung (66).

9. Verfahren nach Anspruch 8, **dadurch gekennzeichnet, dass** die Zuführung der Flüssigkeit zum Rehydrieren des in der Kartusche (96; 101) befindlichem, dehydriertem Lebensmittels (111) während und/oder nach dem Penetrieren erfolgt, wobei vorteilhaft die Zuführung der Flüssigkeit pulsierend und/oder wechselseitig erfolgt.

10. Verfahren nach Anspruch 8 oder 9, **dadurch gekennzeichnet, dass** die Kartusche (96; 101) nach dem Rehydrieren des in der Kartusche befindlichen, dehydrierten Lebensmittels (111) mittels der Wendeeinrichtung (39), vorteilhaft um 180°, gewendet wird, wobei vorteilhaft das Wenden zeitverzögert zum Rehydrieren erfolgt, und weiter vorteilhaft die Kartusche (96; 101) vor dem Wenden von dem Transportmittel (27; 82; 87) mittels der Hubeinrichtung abgehoben wird.

11. Verfahren nach einem der Ansprüche 8 bis 10, **dadurch gekennzeichnet, dass** die Kartusche (96; 101) nach dem Auspressen des zumindest teilweise rehydrierten Lebensmittels aus der Kartusche (96; 101) mittels der Auswurfeinrichtung (48) von der Transporteinrichtung (27; 82; 87) entfernt wird, wobei vorteilhaft die Kartusche (96; 101) während und/oder nach dem Auspressen des zumindest teilweise rehydrierten Lebensmittels, verkleinert wird.

## Claims

1. A device for the automatic preparation of dehydrated food (111)
with a transport means (27, 82, 87) for transporting the food (111) being prepared in the device (11),
with a rehydration device for rehydrating the dehydrated food (111),
with a pressing-out device (43) for pressing out the at least partially rehydrated food,
with a preparation device (51) for preparing the food
and
with a dispensing device (66) for dispensing the prepared food, **characterised in that**
the dehydrated food (111) is provided in a cartridge (96; 101) and
a penetration device (31) with penetration means (32) is provided for penetration the cartridge (96; 101).

2. The device according to claim 1, **characterised in that** the rehydration device is formed by the penetration device (31), which comprises at least one liquid supply, wherein at least a part of the penetration means (32) of the penetration device (31) advantageously forms a component part of the liquid supply.

3. The device according to claim 1 or 2, **characterised in that** a turning device (39) for turning the cartridges (96; 101) is provided advantageously after the rehydration device and before the pressing-out device (43), wherein the turning device (39) is also advantageously coupled with a lifting device.

4. The device according to any one of claims 1 to 3, **characterised in that** an ejection device (48) for removing the cartridges (96; 101) from the transport means (27; 82; 87) is provided, advantageously after the pressing-out device (43).

5. The device according to any one of claims 1 to 4, **characterised in that** a storage arrangement (41) is provided for storing a plurality of the cartridges (96; 101) and/or a liquid tank (46) is provided for the rehydration agent, preferably water, wherein the storage arrangement (41) and/or the liquid tank (46) are advantageously arranged interchangeably in the device (11).

6. The device according to any one of claims 1 to 5, **characterised in that** the preparation device (51) comprises a deep fryer, wherein the preparation agent is a suitable edible oil.

7. The device according to any one of claims 1 to 6, **characterised in that** the transport means comprises a rotary table (27) and/or a conveyor belt (82) and/or a manipulation unit (87), preferably a robot arm.

8. A method for the automatic preparation of dehydrated food (111) with a device (11) according to any one of claims 1 to 7, wherein the dehydrated food (111) is provided in a cartridge (96; 101), **characterised by** the steps:
a) conveying the cartridge (96; 101) to the penetration device (31) by means of the transport means (27; 82; 87),
b) penetrating the cartridge (96; 101) by means of the penetration device (31),
c) rehydrating the dehydrated food (111) by means of a liquid,
d) pressing out the at least partially rehydrated food out of the cartridge (96; 101) by means of the pressing-out device (43),
e) preparing the pressed-out food in the preparation device (51), and
f) dispensing the prepared food in the dispensing device (66).

9. The method according to claim 8, **characterised in that** the supply of the liquid for the rehydration of the dehydrated food (111) present in the cartridge (96; 101) takes place during and/or after the penetration, wherein the supply of the liquid advantageously takes place in a pulsating and/or reciprocal manner.

10. The method according to claim 8 or 9, **characterised in that** the cartridge (96; 101), after the rehydration of the dehydrated food (111) present in the cartridge, is turned, advantageously through 180°, by means of the turning device (39), wherein the turning advantageously takes place with a time lag after the rehydration, and the cartridge (96; 101) is also advantageously raised from the transport means (27; 82; 87) by means of the lifting device before the turning.

11. The method according to any one of claims 8 to 10, **characterised in that** the cartridge (96; 101), after the pressing-out of the at least partially rehydrated food out of the cartridge (96; 101), is removed by means of the ejection device (48) from the transport device (27; 82; 87), wherein the cartridge (96; 101) is advantageously reduced in size during and/or after the pressing-out of the at least partially rehydrated food.

## Revendications

1. Dispositif pour la préparation automatique d'aliments déshydratés (111) comprenant
un moyen de transport (27 ; 82 ; 87) pour transporter l'aliment déshydraté (111) dans le dispositif (11),
comprenant un dispositif de réhydratation de l'aliment déshydraté (111),
comprenant un dispositif de pressage (43) pour presser l'aliment au moins partiellement réhydraté,
comprenant un dispositif de préparation (51) pour préparer l'aliment ainsi
comprenant un dispositif de distribution (66) pour distribuer l'aliment préparé, **caractérisé en ce que**
l'aliment déshydraté (111) est prévu dans une cartouche (96 ; 101) et
qu'un dispositif de pénétration (31) avec un moyen de pénétration (32) est prévu pour faire pénétrer la cartouche (96 ; 101).

2. Dispositif selon la revendication 1, **caractérisé en ce que** le dispositif de réhydratation est formé par le dispositif de pénétration (31) qui présente au moins une amenée de liquide, dans lequel avantageusement, au moins une partie des moyens de pénétration (32) du dispositif de pénétration (31) forme une composante de l'amenée de liquide.

3. Dispositif selon la revendication 1 ou 2, **caractérisé en ce qu'**un dispositif de retournement (39) est prévu pour retourner les cartouches (96 ; 101) avantageusement après le dispositif de réhydratation et avant le dispositif de pressage (43), dans lequel plus encore avantageusement, le dispositif de retournement (39) est doté d'un dispositif de levage.

4. Dispositif selon l'une des revendications 1 à 3, **caractérisé en ce qu'**un dispositif d'éjection (48) est prévu pour enlever les cartouches (96 ; 101) du moyen de transport (27 ; 82 ; 87) avantageusement après le dispositif de pressage (43).

5. Dispositif selon l'une des revendications 1 à 4, **caractérisé en ce qu'**un dispositif de positionnement (41) est prévu pour positionner plusieurs cartouches (96 ; 101) et/ou qu'un réservoir de liquide (46), de préférence de l'eau, est prévu pour le moyen de réhydratation, dans lequel avantageusement, le dispositif de positionnement (41) et/ou le réservoir de liquide (46) sont disposés de façon interchangeable dans le dispositif (11).

6. Dispositif selon l'une des revendications 1 à 5, **caractérisé en ce que** le dispositif de préparation (51) comprend une friteuse, dans lequel le moyen de préparation est une huile alimentaire appropriée.

7. Dispositif selon l'une des revendications 1 à 6, **caractérisé en ce que** le moyen de transport comprend un plateau tournant (27) et/ou une bande transporteuse (82) et/ou une unité de manipulation (87), avantageusement un bras de robot.

8. Procédé de préparation automatique d'aliments déshydratés (111) comprenant un dispositif (11) selon l'une des revendications 1 à 7, dans lequel l'aliment déshydraté (111) est prévu dans une cartouche (96 ; 101), **caractérisé par** les étapes :
a) de transport de la cartouche (96 ; 101) vers le dispositif de pénétration (31) par le biais du moyen de transport (27 ; 82 ; 87),
b) pénétration de la cartouche (96 ; 101) au moyen du moyen de pénétration (31),
c) réhydratation de l'aliment déshydraté (111) au moyen d'un liquide,
d) pressage de l'aliment au moins partiellement réhydraté hors de la cartouche (96 ; 101) au moyen du dispositif de pressage (43),
e) préparation de l'aliment pressé dans le dispositif de préparation (51), et
f) sortie de l'aliment préparé dans le dispositif de distribution (66).

9. Procédé selon la revendication 8, **caractérisé en ce que** l'amenée du liquide pour réhydrater l'aliment (111) déshydraté se trouvant dans la cartouche (96 ; 101) a lieu pendant et/ou après la pénétration, dans lequel avantageusement, l'amenée du liquide se fait par pulsions ou réciproquement.

10. Procédé selon la revendication 8 ou 9, **caractérisé en ce que** la cartouche (96 ; 101), après la réhydratation de l'aliment (111) déshydraté se trouvant dans la cartouche, est retournée au moyen du dispositif de retournement (39), avantageusement de 180°, dans lequel avantageusement, le retournement a lieu avec un retard temporel pour la réhydratation, et plus encore avantageusement, la cartouche (96 ; 101) est soulevée au moyen du dispositif de levage avant le retournement par les moyens de transport (27 ; 82 ; 87).

11. Procédé selon l'une des revendications 8 à 10, **caractérisé en ce que** la cartouche (96 ; 101), après le pressage de l'aliment au moins partiellement réhydraté hors de la cartouche (96 ; 101), est enlevée au moyen du dispositif d'éjection (48) par le dispositif de transport (27 ; 82 ; 87), dans lequel avantageusement, la cartouche (96 ; 101) est réduite pendant et/ou après le pressage de l'aliment au moins partiellement réhydraté.
